(19) Europäisches Patentamt European Patent Office Office européen des brevets

(11) **EP 2 390 863 A2**

(12) **DEMANDE DE BREVET EUROPEEN**

(43) Date de publication:
**30.11.2011 Bulletin 2011/48**

(51) Int Cl.:
**G09B 9/00** *(2006.01)*

(21) Numéro de dépôt: **11167296.0**

(22) Date de dépôt: **24.05.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.05.2010 FR 1002214**

(71) Demandeur: **Airbus Operations**
**31060 Toulouse (FR)**

(72) Inventeurs:
• **Fauvel, Thomas**
**31100, Toulouse (FR)**
• **Lavergne, Fabien**
**31840, Aussonne (FR)**

(74) Mandataire: **Le Tourneau, Augustin**
**Santarelli, groupement nr. 89**
**14 Avenue de la Grande Armée**
**75017 Paris (FR)**

(54) **Dispositif d'équilibrage d'une plateforme de simulation, et procédé associé**

(57) L'invention concerne l'équilibrage d'une plateforme de simulation (1) comprenant un système non linéaire aéronautique (Mi, 20, 100).

L'équilibrage repose sur :
- un asservissement (200, 300) d'une valeur de sortie ($\tilde{Y}$, $\tilde{Y}^{(-1)}$) du système sur une valeur de consigne $\left( Y_{k,cons}^{(i)}, \tilde{Y}_{cons} \right)$, comprenant un premier filtre (300) réalisant une inversion d'un modèle simplifié ($F_m$, $G_m$)

du système pour générer une dite commande (U) pour le système à partir d'une information de correction de modèle ($\Delta_{corr}$) estimant une erreur ($\Delta_m$) de modélisation du modèle simplifié ($F_m$, $G_m$) et d'une information de différence (v) entre la valeur de sortie et la valeur de consigne, et
- un bouclage correcteur de modélisation comprenant un deuxième filtre (400) mettant en oeuvre ledit modèle simplifié pour calculer, à partir de ladite commande et de ladite valeur de sortie, l'information de correction de modèle à fournir au premier filtre.

Fig. 3

## Description

La présente invention concerne l'équilibrage d'une plateforme de simulation notamment de systèmes aéronautiques, et en particulier une telle plateforme, un procédé et un dispositif d'équilibrage.

La simulation d'équipements est un domaine distinct de l'exploitation effective de tels équipements, notamment en raison du fait qu'elle participe, largement en amont de l'exploitation, à la mise au point de ces équipements d'exploitation.

Dans une fonction classique, la simulation permet, par la mise en oeuvre de modèles logiciels ou matériels représentatifs des comportements de systèmes et de leurs environnements, de réduire considérablement les coûts de développement.

Dans le domaine particulier de l'aéronautique, les nouvelles architectures d'aéronef sont généralement développées en simulant tout ou partie des équipements constituant ces architectures.

Ainsi, une plateforme de simulation présente des proportions diverses d'équipements correspondant aux systèmes de l'aéronef, notamment sous forme d'équipements réels et/ou d'équipements simulés par un modèle logiciel (moteur, lois de commandes de vol, carburant, hydraulique, etc.), et des modèles logiciels représentatifs de composantes de l'environnement dans lequel l'aéronef est amené à progresser ou du cockpit du pilote (visuel, aérodynamique, mécanique du vol ou autres aspects de l'environnement de l'aéronef tels l'atmosphère, le sol, etc.)

L'ensemble des modèles logiciels et équipements réels conservés constitue les composantes de la plateforme de simulation. Chaque composante présente une fonction de transfert, ou "dynamique propre", liant ses entrées à ses sorties. Ces composantes sont regroupées et interagissent à l'aide de flux de données circulant au travers des entrées/sorties d'une application générale de simulation.

La simulation d'aéronef est généralement utilisée pour mettre au point et valider les systèmes avion dans tout le domaine de vol, par exemple au décollage, en phase d'approche/atterrissage ou en croisière.

Ainsi, lors des simulations effectives par un opérateur, la plateforme et l'application de simulation sont mises dans un mode d'initialisation par lequel l'aéronef simulé est positionné dans l'espace, en le plaçant dans un équilibre statique et dynamique stable en tenant compte de l'environnement simulé de l'aéronef. Ce positionnement et cet équilibre sont donc amenés à varier considérablement en fonction des parties de vol à simuler.

Une fois cet équilibre obtenu, l'application est passée en mode opérationnel de simulation consistant à exécuter la simulation de l'aéronef en reproduisant l'aspect fonctionnel de l'aéronef depuis sa position d'équilibre pendant une phase de vol donnée.

Cet équilibrage préalable de l'aéronef est crucial afin de pouvoir effectuer un passage en mode opérationnel dans les meilleures conditions, notamment en évitant toute discontinuité de l'état des systèmes simulés. Une telle discontinuité est en effet susceptible de rendre le comportement de l'aéronef simulé, et donc de la plateforme de simulation, éventuellement réalisée sous forme d'un prototype articulé, incontrôlable. Un tel prototype sur vérins commandés par l'application de simulation et contenant éventuellement des opérateurs peut alors chuter, entraînant des dommages.

L'équilibrage consiste généralement en la détermination d'une configuration des commandes (surfaces mobiles, poussée moteur) et autres paramètres de l'aéronef, en fonction de sa position dans l'espace, de son vecteur vitesse et/ou accélération (amplitude et orientation) et de conditions atmosphériques choisis avant le début de la simulation.

A titre d'exemple, on peut être amené à calculer l'attitude avion et les positions des commandes des gouvernes de profondeur, de direction, de gauchissement et des gaz, qui permettent d'atteindre des valeurs cibles des accélérations linéaires et angulaires suivantes $\dot{U}x_1$, $\dot{U}y_1$, $\dot{U}z_1$, $\dot{P}_1$, $\dot{P}_1$, $\dot{Q}_1$) et $\dot{R}_1$ ou des vitesses correspondantes $Ux_1$, $Uy_1$, $Uz_1$, $P_1$, $Q_1$ et $R_1$.

Cette détermination n'est pas sans difficulté étant donnée que les composantes de simulation, qu'elles soient les équipements réels ou des équipements simulant fournis par des sous-traitants, sont le plus souvent des "boîtes noires" dont les fonctions de transfert demeurent inconnues.

Parmi les différentes méthodes d'équilibrage envisageables, l'une peut consister à réutiliser des enregistrements de paramètres avion réalisés lors de vols par exemple, pour déterminer la configuration de l'aéronef en fonction des valeurs cibles souhaitées. Toutefois, une telle solution ne peut pas être mise en oeuvre lors du processus de fabrication d'un nouvel aéronef, puisque ce dernier n'a pas encore volé. De plus cette méthode ne permet d'obtenir un équilibrage que dans un nombre restreint de configurations car elle se base sur un nombre limité d'enregistrements. Il est donc impossible d'équilibrer toutes les situations souhaitées.

Une deuxième méthode consiste à jouer un vol de l'aéronef depuis une position d'équilibre parfaitement connue (généralement à l'arrêt avant décollage) jusqu'à ce que celui-ci soit dans la position souhaitée. Toutefois, cette solution est coûteuse en temps (temps de vol), et est fortement sensible à toute erreur de modélisation du modèle utilisé pour jouer le vol.

Une troisième méthode, plus largement répandue, met en oeuvre un modèle de simulation au sein de l'application de même nom, aux fins de l'équilibrage uniquement. Ce modèle de simulation relie les variables de commande U (position des commandes de l'avion par exemple) à déterminer aux valeurs de sortie Y, type vitesse et accélération.

L'équilibrage est réalisé axe par axe (longitudinal, latéral) sur la base d'un asservissement linéaire du modèle de simulation, visant à faire converger les valeurs de sortie Y vers des valeurs cibles souhaitées $Y_c$: U = K ($Y_c$ - Y), jusqu'à un certain seuil défini par l'utilisateur ou le développeur. Durant cette phase, différentes composantes de simulation sont sollicitées, notamment la mécanique du vol, l'atmosphère, les commandes de vol ou encore les moteurs.

Le modèle de simulation est généralement établi sans connaissance exacte de la fonction de transfert de l'équipement concerné.

Le choix des variables asservies et imposées en fonction du point de vol cible se fait à l'aide du bon sens et d'une bonne connaissance empirique de l'équilibrage.

A titre d'exemple, dans le cas de l'asservissement de la vitesse longitudinale $Ux_1$ par la poussée T, l'asservissement mis en oeuvre par cette troisième méthode se présente sous la forme : $T = K.(Ux_{1_c} - Ux_1)$

Toutefois cette troisième méthode présente également certains inconvénients. Notamment, la méthode est sensible aux erreurs dues à la modélisation de systèmes non linéaires en modèles linéaires triviaux.

Cela signifie d'une part que plus la modélisation est grossière, plus les variables de commande fournies sont erronées. A l'opposé, les modèles précis sont très volumineux de sorte qu'une simplification de la modélisation est largement recherchée pour réduire les temps de traitement.

Cela signifie également que la méthode n'offre aucune généricité pour la simulation d'un point de vol à un autre ou d'un aéronef à un autre. Un nouveau modèle doit être alors utilisé et/ou de nouveaux paramétrages doivent être effectués pour tenir compte de ce changement de point de vol ou d'aéronef résultant d'une mise à niveau entre deux simulations.

Par ailleurs, le temps de simulation nécessaire pour atteindre l'équilibre recherché n'est pas déterministe dans cette méthode. Il est donc généralement nécessaire de limiter le temps d'équilibrage et d'utiliser les variables de commande résultantes, approximatives, correspondantes.

Enfin, cette méthode n'est pas répétitive en raison de dérives numériques introduites par l'asservissement linéaire. On obtient ainsi des états différents de l'aéronef pour un même positionnement de celui-ci. Or cette propriété peut s'avérer importante lorsque l'on analyse l'influence d'un paramètre sur le comportement de l'aéronef en reproduisant plusieurs fois la simulation depuis le supposé même point d'équilibre.

La présente invention vise à pallier au moins un des inconvénients des méthodes et dispositifs d'équilibrage ci-dessus en proposant, tout d'abord, une plateforme de simulation comprenant une pluralité d'équipements de systèmes incluant au moins un système non linéaire et comprenant un dispositif d'équilibrage dudit système non linéaire à partir d'au moins une valeur de consigne à atteindre en sortie du système non linéaire, ledit système non linéaire fournissant au moins une valeur de sortie fonction d'au moins une commande reçue en entrée, et
ledit dispositif d'équilibrage comprenant:

- une boucle d'asservissement de l'au moins une valeur de sortie sur au moins une valeur correspondante de consigne, la boucle d'asservissement comprenant un premier filtre réalisant une inversion d'un modèle simplifié dudit système non linéaire pour générer une dite commande pour le système non linéaire à partir d'une information de correction de modèle estimant une erreur de modélisation du modèle simplifié et d'une information de différence entre la valeur de sortie et la valeur correspondante de consigne, et

- un bouclage correcteur de modélisation pour fournir ladite information de correction de modèle audit premier filtre, ledit bouclage correcteur comprenant un deuxième filtre mettant en oeuvre ledit modèle simplifié du système non linéaire pour calculer l'information de correction de modèle à partir de la commande en sortie du premier filtre et de ladite valeur de sortie du système non linéaire.

Au sein de cette plateforme, l'invention peut être vue comme un dispositif d'équilibrage de plateforme de simulation, comprenant :

- au moins une composante de simulation présentant une fonction de transfert représentative d'un système non linéaire et formant partie de la plateforme de simulation ;

- un premier filtre réalisant une inversion d'un modèle simplifié de ladite fonction de transfert, pour générer une commande compensée en entrée de ladite composante de simulation à partir d'au moins une valeur de sortie de la composante de simulation, d'au moins une valeur correspondante de consigne, et d'une information de correction de modèle ; et

- un deuxième filtre pour calculer l'information de correction de modèle estimant une erreur de modélisation entre le modèle simplifié et ladite composante de simulation, à partir du modèle simplifié, de la commande compensée et de ladite valeur de sortie.

Selon l'invention, on utilise un modèle simplifié de la fonction de transfert du système non linéaire à équilibrer pour le calcul des commandes d'équilibrage, lequel modèle simplifié est corrigé par bouclage correcteur de modélisation. Ce dernier affine l'estimation de l'erreur de modélisation jusqu'à converger vers la différence exacte de modélisation. Il en résulte une correction dont découle une tolérance à l'erreur de modélisation. Grâce à cette tolérance, des modèles grossiers peuvent être utilisés pour des calculs plus simples et plus rapides.

La convergence vers la différence de modélisation est rendue possible par l'utilisation directe de la composante de simulation (c'est-à-dire le système non linéaire) à équilibrer, dans le processus d'estimation de l'information de correction par le second filtre.

On observe ainsi que, complémentairement à l'art antérieur où le système d'équilibrage comprend classiquement un bouclage d'asservissement linéaire pour faire converger la sortie vers une valeur cible, la présente invention apporte un bouclage correcteur de modélisation.

Par ailleurs, grâce à cette convergence, le premier filtre mettant en oeuvre le modèle simplifié corrigé tend à réaliser une inversion parfaite de la dynamique de la composante de simulation. Il en résulte un découplage possible entre les commandes à équilibrer.

Selon un mode de réalisation, le système non linéaire présente une fonction de transfert non linéaire affine ayant comme dynamique d'entrées-sorties:

$$\tilde{Y} = F(X) + G(X).U$$

où U est un vecteur correspondant à la commande d'entrée, X est un vecteur correspondant à un état du système non linéaire et $\tilde{Y}$ est un vecteur correspondant à l'au moins une valeur de sortie.

Dans cette configuration, la modélisation de la dynamique du système non linéaire peut être rendue simple. En outre, son inversion pour le premier filtre est également simple, consistant principalement à inverser la modélisation de G(X).

En particulier, il est possible de réduire la modélisation de F(X) à une valeur nulle. Il a en effet été observé et démontré que la convergence du second filtre pouvait être indépendante de F(X). Ainsi, les premier et deuxième filtres sont simplifiés et leurs temps de calculs correspondants sont réduits.

Dans un mode de réalisation, le deuxième filtre comprend des composants pour estimer l'intégrale de la différence entre la valeur de sortie du modèle simplifié corrigé par l'information de correction appliquée à ladite commande générée et la valeur de sortie du système non linéaire.

Dans cette configuration, la dynamique du deuxième filtre a le comportement d'un filtre du premier ordre, donc stable, ayant une consigne égale à l'erreur entre le modèle simplifié et la dynamique propre du système non linéaire. Le système d'équilibrage converge ainsi explicitement vers cette erreur de modélisation.

Les inventeurs ont notamment mathématiquement démontré et observé que, dans le cas d'un système non linéaire mono-variable, la présente invention corrige une erreur de modélisation pourvu qu'elle soit strictement inférieure à 100% en valeur absolue.

En particulier, lesdits composants pour estimer comprennent des moyens pour évaluer la valeur de sortie du modèle simplifié à partir de la commande générée, un additionneur/soustracteur pour modifier cette valeur par soustraction de l'information de correction, un intégrateur pour intégrer la sortie de l'additionneur/soustracteur et un deuxième additionneur/soustracteur pour soustraire à la sortie de l'intégrateur, une valeur intégrée de la sortie du système non linéaire.

Notamment, le deuxième filtre comprend un composant multipliant l'intégrale évaluée par un gain. Grâce à la stabilité du deuxième filtre, on maîtrise la vitesse de convergence de l'information de correction vers l'erreur de modélisation en adaptant ce gain (relation bi-univoque entre la vitesse de convergence et la valeur du gain). De la sorte, on réalise un estimateur à grand gain de l'erreur de modèle pour garantir le déterminisme de la solution d'équilibrage proposée.

Selon un mode de réalisation, ledit modèle simplifié est non linéaire affine de la forme $\tilde{Y} = F_m(X) + G_m(X).U$, et le bouclage correcteur de modélisation (conféré par le deuxième filtre) est régi par:

$$\begin{cases} \Delta_{corr} = \omega_{corr} \int \left( \left( F_m(X) + G_m(X).U \right) - Y - \Delta_{corr} \right) dt \\ U = G_m^*(X).\left( v - F_m(X) + \Delta_{corr} \right) \end{cases},$$

où $\Delta_{corr}$ est l'information de correction de modèle, $\omega_{corr}$ est le gain du deuxième filtre, et v est une valeur représentative de la différence entre la valeur de sortie du système non linéaire et la valeur de consigne correspondante.

Par cette configuration, la mise en oeuvre de l'invention au sein du code source de l'application de simulation peut se réduire à une unique ligne de code comparé au code pour un asservissement linéaire classique U=K.($Y_{cons}$-Y). Cette ligne supplémentaire défini le bouclage correcteur de modélisation selon l'invention.

Selon une caractéristique de l'invention, le dispositif comprend un troisième filtre linéaire pour estimer une information de différence de l'au moins une valeur de sortie du système non linéaire et de l'au moins une valeur correspondante de consigne, et fournir ladite information de différence en entrée dudit premier filtre.

Dans ce cas, le ratio entre le plus haut gain du troisième filtre et ledit gain multiplicateur du deuxième filtre :

- peut être strictement inférieur à ¼ pour assurer une non-interaction parfaite entre les filtres ;
- peut être compris entre ½ et ¼ sans altérer les qualités de stabilité et de performances robustes de l'ensemble.

Corrélativement, l'invention vise également un procédé d'équilibrage d'une plateforme de simulation comprenant une pluralité d'équipements de systèmes incluant au moins un système non linéaire et comprenant un dispositif d'équilibrage dudit système non linéaire à partir d'au moins une valeur de consigne à atteindre en sortie du système non linéaire, ledit système non linéaire fournissant au moins une valeur de sortie fonction d'au moins une commande reçue en entrée, le procédé comprenant, au niveau du dispositif d'équilibrage:

- une étape d'asservissement de l'au moins une valeur de sortie sur au moins une valeur correspondante de consigne, par inversion d'un modèle simplifié dudit système non linéaire, pour générer une dite commande pour le système non linéaire à partir d'une information de correction de modèle estimant une erreur de modélisation du modèle simplifié et d'une information de différence entre la valeur de sortie et la valeur correspondante de consigne, et;
- une étape de correction de modélisation mettant en oeuvre ledit modèle simplifié du système non linéaire pour calculer l'information de correction de modèle à partir de la commande générée et de ladite valeur de sortie du système non linéaire.

En d'autres termes, le procédé selon l'invention peut également être vu comme un procédé d'équilibrage d'une plateforme de simulation comprenant au moins une composante de simulation présentant une fonction de transfert représentative d'un système pouvant être non linéaire, le procédé comprenant:

- une étape d'inversion d'un modèle simplifié de ladite fonction de transfert, pour générer une commande compensée en entrée de ladite composante de simulation à partir d'au moins une valeur de sortie de la composante de simulation, d'au moins une valeur correspondante de consigne, et d'une information de correction de modèle;
- une étape de calcul de l'information de correction de modèle estimant une erreur de modélisation entre le modèle simplifié et ladite composante de simulation, à partir modèle simplifié, de la commande compensée et de ladite valeur de sortie.

De façon optionnelle, le procédé peut comprendre des étapes se rapportant aux caractéristiques du dispositif d'équilibrage exposé précédemment.

Notamment, on itère les étapes d'inversion et de calcul de sorte que ladite information de correction de modèle converge vers la différence de modélisation entre ledit modèle simplifié et la fonction de transfert de la composante (du système non linéaire). Cette itération résulte du bouclage correcteur de modélisation correspondant dans le dispositif d'équilibrage.

Egalement l'invention vise un produit programme d'ordinateur lisible par un microprocesseur, comprenant des portions de code logiciel adaptées à mettre en oeuvre le procédé d'équilibrage selon l'invention, lorsqu'il est chargé et exécuté par le microprocesseur.

D'autres particularités et avantages de l'invention apparaîtront encore dans la description ci-après, illustrée par les dessins ci-joints, dans lesquels :

- la **figure 1** représente une plateforme de simulation pour la mise en oeuvre de la présente invention;
- la **figure 2** illustre l'équilibrage d'un aéronef dans l'espace;
- la **figure 3** représente un exemple de dispositif d'équilibrage selon l'invention; et
- les **figures 4a** et **4b** représentent des graphiques illustrant de façon comparative les performances de l'invention par rapport aux solutions connues.

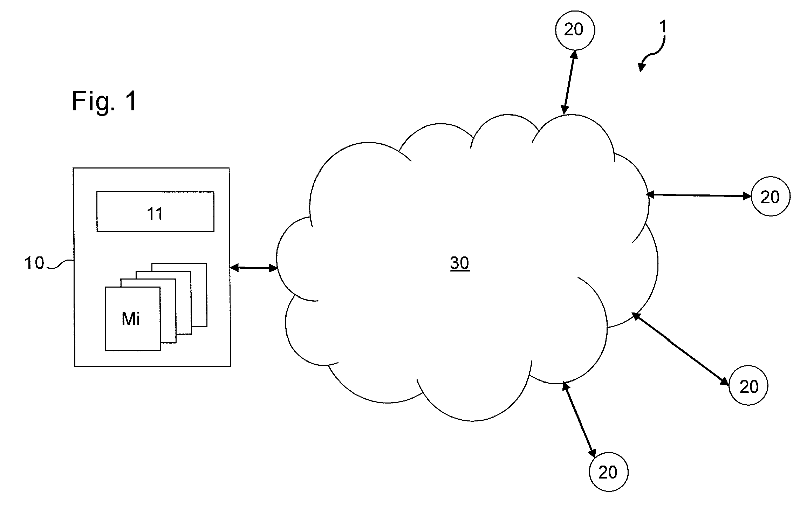

Sur la **figure 1,** un simulateur 1 de système embarqué d'aéronef comprend:

- une unité de simulation 10, également appelée *"host",* pour simuler un ensemble d'équipements du système embarqué,

- un ensemble d'équipements embarqués réels 20,
- et un réseau 30, par exemple de type AFDX (« *Avionics Full DupleX switched Ethernet »),* pour permettre la communication de données entre les divers équipements de l'aéronef que ceux-ci soient réels ou simulés dans le host 10.

Les équipements de l'aéronef sont des systèmes qui présentent, en soi, une dynamique propre. En particulier, on s'intéresse dans le présent exemple à des systèmes dont une représentation par des équations d'état est non linéaire affine, adaptée au domaine aéronautique, comme suit:

$$\begin{cases} \dot{X} = A(X) + B(X).U \\ Y = C(X) \end{cases} \qquad (1)$$

où $U \in R^m$ est l'entrée du système, autrement appelée vecteur variable de commande, $X \in R^n$ est l'état (vecteur) du système ($\dot{X}$ sa dérivée) et $Y \in R^p$ est la sortie du système, autrement appelée vecteur variable d'observation.

Dans l'exemple évoqué précédemment, la sortie peut correspondre à la vitesse longitudinale de l'aéronef, l'entrée peut correspondre à la commande des gaz (liée à la poussée) et les variables d'état du système peuvent représenter les positions des surfaces de vol modifiables (volets, aérofreins, etc.), l'angle d'attaque de l'aéronef, sa masse, etc.

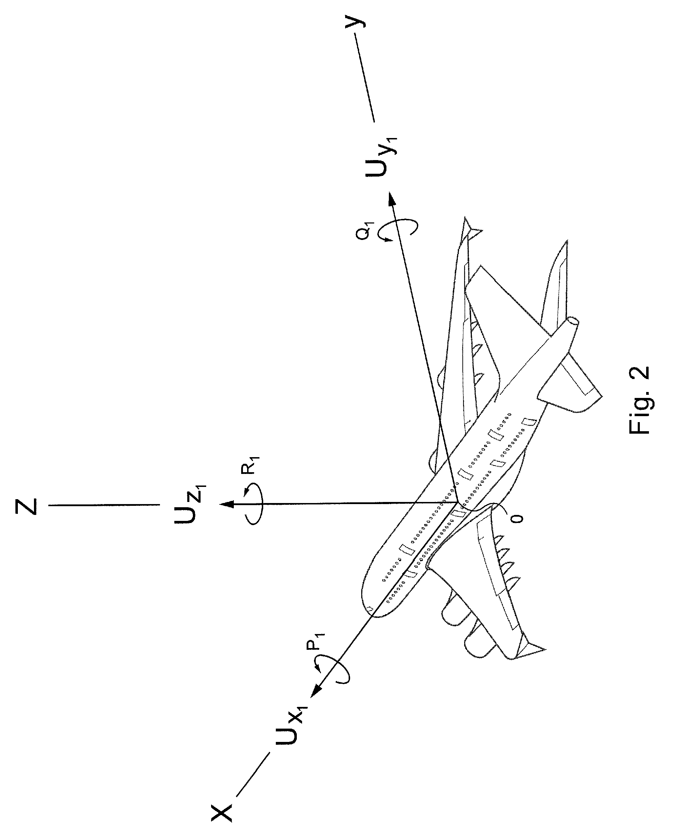

Qu'ils soient réels (20) ou simulés (Mi), ces systèmes constituent des composantes du simulateur (ou "composantes de simulation"). L'opération d'équilibrage visée dans le présent exemple de l'invention consiste en particulier à obtenir les valeurs de commande U, telles que les commandes des gouvernes de profondeur, de direction, de gauchissement et des gaz, nécessaires pour une position et une configuration de l'aéronef simulé souhaitée. Ces valeurs de commande U correspondent à certaines valeurs d'observation Y telles que les accélérations linéaires et angulaires suivantes $\dot{U}x_1, \dot{U}y_1, \dot{U}z_1, \dot{P}_1, \dot{Q}_1, et \dot{R}_1$, ou des vitesses correspondantes $Ux_1, Uy_1, Uz_1, P_1, Q_1, et R_1$, comme représentées sur la **figure 2.** L'état X est quant à lui défini pas un ensemble d'autres paramètres de l'aéronef, représentatifs par exemple de grandeurs influant sur la relation entre les valeurs de U et Y.

L'unité de simulation 10 regroupe une application de simulation générale 11 et un ensemble de modèles de simulation Mi simulant chacun les fonctions d'un équipement correspondant, par exemple un modèle pour le pilote automatique, un modèle pour les commandes manuelles de vol, etc. L'application de simulation fournit l'environnement logiciel permettant l'exécution des modèles Mi et les moyens de transfert de données entre ces modèles et les équipements réels extérieurs 20. Ces modèles Mi peuvent par exemple être fournis par les fabricants des équipements correspondants.

En fonction des simulations, certains modèles $M_i$ peuvent être remplacés, dans le simulateur 1, par les équipements réels correspondants, vice et versa. Cela permet de tester progressivement l'intégration de ces équipements réels dans le réseau embarqué.

Le simulateur 1 peut notamment prendre la forme d'un prototype dans lequel des opérateurs prennent place pour mener des tests, par exemple une cabine de test montée sur vérins.

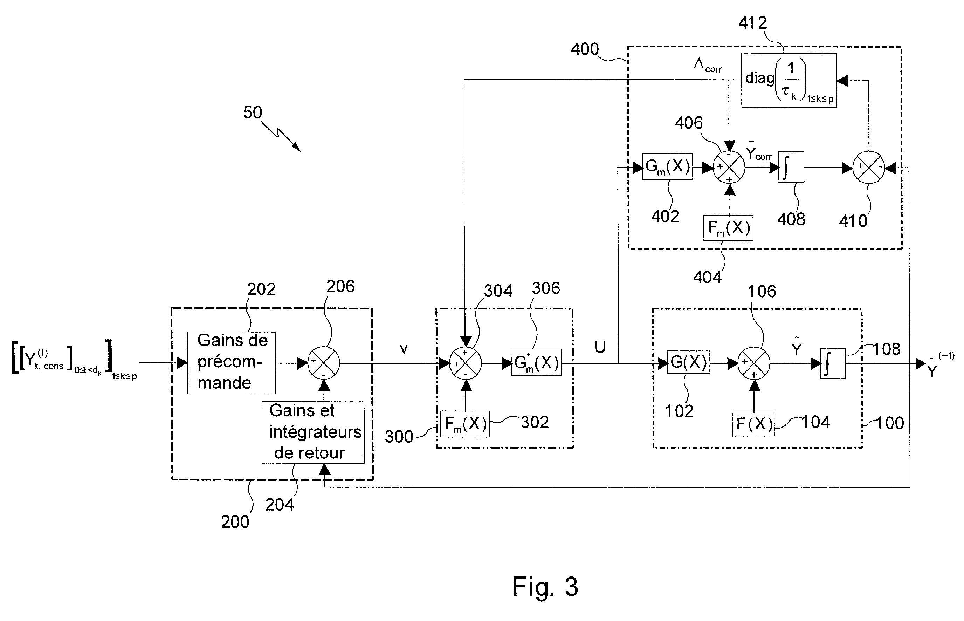

La **figure 3** montre un exemple de dispositif logique d'asservissement 50, objet de la présente invention, pour l'équilibrage d'une ou plusieurs composantes de simulation 100, voire l'intégralité du simulateur 1.

Soit le « degré relatif », défini comme l'ordre de dérivation minimal nécessaire de $Y_i$ exhibant une dépendance en U ou l'une de ses composantes. Le bloc 100 représente une ou plusieurs composantes de simulation non linéaires affines commandables dont une représentation entrées-sorties, dite fonction de transfert, est:

$$\tilde{Y} = \begin{bmatrix} Y_1^{(d_1)}(U) \\ \vdots \\ Y_p^{(d_p)}(U) \end{bmatrix} = F(X) + G(X).U \qquad (2) \quad (2)$$

où $d_i$ est le degré relatif de chaque sortie $Y_i$ ($Y_i^{(di)}$ étant la dérivée $d_i$-ème de $Y_i$), et F et G des fonctions non-linéaires. Dans le domaine aéronautique, ces fonctions F et G présentent notamment des dérivées partielles jusqu'à l'ordre 2 qui sont bornées garantissant le contrôle de l'aéronef.

Ces composantes de simulation 100 sont des boites noires pour l'opérateur, soit en raison de la complexité du modèle Mi (les fonctions non-linéaires F et G) correspondant, soit parce qu'il s'agit d'équipements réels clos pour lesquels on ne connaît ni F ni G.

Les difficultés de l'art antérieur étaient ainsi :

- d'obtenir une modélisation quasi-parfaite de chaque composante afin de limiter les erreurs d'équilibrage au risque d'une charge de calcul rédhibitoire, et
- de se baser sur un modèle trivial compromettant ainsi la précision, le déterminisme et la répétitivité du dispositif d'équilibrage.

La présente invention permet de s'affranchir partiellement de cette contrainte de précision de modélisation grâce à une tolérance sur la modélisation compensée par une estimation de l'erreur de modélisation à l'aide de la composante modélisée.

On a représenté le bloc 100 d'un point de vue fonctionnel avec un bloc 102 calculant G(X) et le multipliant à l'entrée de commande U, un bloc 104 de calcul de F(X), un additionneur 106 additionnant les sorties des blocs 102 et 104 pour obtenir la sortie $\tilde{Y}$.

Il est cependant possible que les équipements réels (et donc également les modèles Mi correspondants) fournissent chaque sortie $Y_i$ à un indice de dérivation égal à $d_i$-1. Cette configuration est illustrée ici par l'intégrateur 108 qui fournit ainsi une sortie intégrée, notée $\tilde{Y}^{(-1)}$, à partir de $\tilde{Y}$.

Aux fins d'équilibrage des composantes 100 de la plateforme de simulation, on dispose d'une modélisation simplifiée de la dynamique propre de l'équipement réel 20 ou de la composante modélisée par Mi par des fonctions $F_m(X)$ et $G_m(X)$ (généralement sous forme de matrices, ayant également des dérivées partielles jusqu'à l'ordre 2 bornées). La modélisation simplifiée introduit de la sorte une erreur de modélisation, notée $\Delta_m$.

Ainsi, la fonction de transfert modélisée est comme suit:

$$\tilde{Y} = F_m(X) + G_m(X).U$$

Le dispositif d'équilibrage 50 des composantes 100 reçoit en entrée des valeurs de consigne $Y_{cons}$ définissant la position et la configuration de l'aéronef souhaitée. Ces valeurs de consignes sont constituées de toutes les dérivées $Y_{k,cons}^{(i)}, 0 \leq i < d_k$. Généralement, ces valeurs de consignes sont limitées aux position (ou angle), vitesse et accélération.

Le bloc 200 est un filtre à commande linéaire qui reçoit, outre les valeurs de consigne, la sortie intégrée $\tilde{Y}^{(-1)}$ du bloc 100, et fournit en sortie une valeur v représentative d'une différence entre la sortie Y du bloc 100 et les valeurs de consignes, que l'on peut représenter schématiquement par $v = \omega(\tilde{Y}_{cons} - \tilde{Y})$ où $\omega$ est le gain du filtre 200 ($\omega_i$ pour chaque composante de $\tilde{Y}$).

En détail, le bloc 200 comprend un bloc 202 d'amplification des valeurs de consignes réalisant un produit matriciel avec une matrice de gain de précommande (gain en seconde$^{-1}$), un bloc 204 d'amplification (gain en s$^{-1}$) et d'intégration des valeurs de sortie intégrées $\tilde{Y}^{(-1)}$ réalisant également un produit matriciel.

Les sorties des blocs 202 et 204 sont soustraites l'une à l'autre par l'additionneur 206 pour fournir le vecteur v de sortie de bloc 200.

Le bloc 200 réalise ainsi un asservissement de la sortie des composantes 100 sur les valeurs de consigne.

Le filtre 300 d'inversion de la dynamique modélisée reçoit le vecteur v des sorties comparées avec les valeurs de consigne, les inverse afin d'estimer un vecteur de commande U. Ce vecteur de commande U est utilisé comme entrée de la composante 100 à équilibrer.

En raison de l'asservissement conféré par le bloc 200, le vecteur de commande U évolue jusqu'à obtention de l'équilibre du système 50, c'est-à-dire lorsque le bloc 300 commande la composante 100 pour obtenir les valeurs de consigne en sortie du bloc 100.

Selon l'invention, le filtre 300 reçoit en outre, en entrée, une information de correction du modèle $\Delta_{corr}$. Cette information de correction est un estimateur (ou observateur) à grand gain généré par le filtre 400 comme décrit ci-après, convergeant vers l'erreur de modélisation $\Delta_m$ de par sa constitution.

En détail, le filtre 300 comprend un bloc 302 d'estimation de la valeur $F_m(X)$ et un additionneur 304 sommant les deux entrées v et $\Delta_{corr}$, et retranchant la sortie du bloc 302.

Le bloc 306 reçoit la sortie de l'additionneur 304, calcule la valeur $G_m^*(X)$ où $G_m^*$ est l'inverse (ou pseudo inverse à droite) de $G_m$, puis multiplie ces deux valeurs.

La sortie du filtre 300 est le vecteur de commande U compensé ou corrigé de l'erreur $\Delta_{corr}$ vérifiant ainsi:

$$U = G_m^{*}(X).\big(v + \Delta_{corr} - F_m(X)\big)$$

Du fait de la convergence de $\Delta_{corr}$ vers $\Delta_m$, l'inversion de dynamique du filtre 300 est asymptotiquement parfaite. Ainsi, elle offre découplage et linéarisation asymptotique des relations sorties-entrées, ce qui permet un équilibrage simplifié commande par commande.

Le filtre 400 est un estimateur à grand gain de l'erreur de modélisation $\Delta_m$ par convergence asymptotique.

Le filtre 400 reçoit en entrée le vecteur de commande U issu du filtre 300 et les sorties intégrées $\tilde{Y}^{(-1)}$ du bloc 100. En variante, il peut recevoir les sorties $\tilde{Y}$ du bloc 100 auquel cas il met, lui-même, en oeuvre l'intégration 108. Un

estimateur choisi est $\Delta_{corr} = \Delta_{corr} = \begin{pmatrix} 1/\tau_1 & 0 & 0 \\ 0 & ... & 0 \\ 0 & 0 & 1/\tau_p \end{pmatrix}.\int\left(\tilde{Y}_{corr} - \tilde{Y}\right).dt$ où $\tilde{Y}_{corr}$ est le vecteur de sorties du modèle simplifié corrigé à l'aide de l'information de correction $\Delta_{corr}$ lorsqu'il prend en entrée les commandes U résultant du filtre 300: $\tilde{Y}_{corr} = F_m(X) + G_m(X).U - \Delta_{corr}$.

Une simple réécriture de cet estimateur $\Delta_{corr} = diag\left(\dfrac{1}{\tau_i}\right).\int\left(\Delta_m - \Delta_{corr}\right).dt$ montre que le filtre 400 a un comportement d'un filtre du premier ordre ayant comme consigne $\Delta_m$. Dans cet estimateur, le gain associé à chaque sortie $Y_i$ repose sur le calibrage d'un seul paramètre: la constante de temps $\tau_i$. Il est ainsi aisé de modifier le système d'équilibrage 50 pour assurer une convergence aussi rapide vers toutes les valeurs de consigne. On notera que l'utilisation

de grands gains $\dfrac{1}{\tau_i}$ assure des vitesses de convergence importantes du filtre 400 vers les commandes à équilibrer.

De ce fait le système est déterministe. On veillera toutefois à conserver un ratio entre les gains $\omega_i$ du filtre 200 et les

gains $\dfrac{1}{\tau_i}$ du filtre 400 inférieur à ½ pour garantir stabilité et robustesse du système d'équilibrage : $0<\omega_i\tau_i<½$. Possiblement, on peut choisir $0 < \omega_i\tau_i \leq \dfrac{1}{4}$ afin d'assurer une non-interaction parfaite (non recouvrement) entre les filtres du système. Notamment, on pourra choisir $\omega_i\tau_i = \dfrac{1}{4}$, , ce ratio offrant les avantages mentionnés ci-dessus tout en conservant généralement un gain $\dfrac{1}{\tau_i}$ du filtre 400 grand et raisonnable au regard de la limite de Shannon au-delà de laquelle les effets de la discrétisation deviennent significatifs.

En détail, le filtre 400 comprend un bloc 402 recevant l'entrée de commande U. Ce bloc 402 estime $G_m(X)$ puis le multiplie à l'entrée U.

Un second bloc 404 estime $F_m(X)$.

Un additionneur 406 somme les sorties des blocs 402 et 404, et retranche l'estimateur $\Delta_{corr}$ fournie en sortie du filtre 400, fournissant ainsi le vecteur sorties corrigé $\tilde{Y}_{corr}$.

La sortie de l'additionneur 406 est alors intégrée par l'intégrateur 408.

Un deuxième additionneur 410 reçoit la valeur intégrée de $\tilde{Y}_{corr}$ et lui retranche le vecteur de sortie intégrée $\tilde{Y}^{(-1)}$ du bloc 100.

La sortie de l'additionneur 410 est amplifiée par le bloc 412 à grand gain pour obtenir l'estimateur $\Delta_{corr}$ utilisé comme information de correction du modèle par le filtre 300.

En utilisant des constantes de temps $\tau_i$ faibles, l'estimateur prévu dans cet exemple de l'invention est à grand gain, offrant stabilité et robustesse tout en convergeant vers l'erreur de modélisation $\Delta_m$.

Le filtre 400 constitue le coeur du bouclage correcteur de modélisation entre la composante de simulation non linéaire à équilibrer et le filtre 300 d'asservissement classique.

L'équilibrage de la plateforme de simulation est ainsi obtenu alors que des erreurs importantes de modélisation sont effectuées. Par exemple, dans le cas d'une dynamique de la composante 100 reposant sur une relation mono-variable, une erreur de modélisation jusqu'à 100% (strictement inférieur) en valeur absolue est acceptable.

Le dispositif d'équilibrage 50 est mis en oeuvre de manière discrétionnaire comme tout moyen informatique. Il en résulte l'écriture suivante de la loi de commande entre deux itérations n et n+1 consécutives:

$$\begin{cases} \Delta_{corr_{n+1}} = \Delta_{corr_n} + \delta t \left( \omega_{corr} \left[ \left( \mathbf{F}_m + \mathbf{G}_m U_n \right) - \widetilde{Y}_n - \Delta_{corr_n} \right] \right) \\ U_n = \mathbf{G}_m^* \left( \omega \left( \widetilde{Y}_{cons} - \widetilde{Y}_n \right) - \mathbf{F}_m + \Delta_{corr_{n+1}} \right) \end{cases},$$

où $\omega_{corr}$ est le gain du filtre 400 et $\omega$ est le gain du filtre 200.

Cette représentation peut être codée en seulement deux lignes par asservissement dans le programme informatique d'équilibrage.

En comparaison, l'asservissement classique de l'art antérieur: $U_n = K(Y_c - Y_n)$, est codée en une ligne.

Le coût de mise en oeuvre logicielle de la présente invention peut s'avérer être faible (une ligne de code supplémentaire pour coder le bouclage correcteur de modélisation) au regard des gains obtenus. Par ailleurs, il apparaît simple de mettre à jour les programmes d'équilibrage actuels par modification/adjonction de ces lignes de code.

A titre d'illustration, considérons l'équilibrage de la manette des gaz (poussée de l'avion) pour obtenir une vitesse horizontale $U_{x1}$ souhaitée. Grâce notamment au découplage résultant de l'inversion asymptotiquement parfaite du filtre 300, il est possible d'équilibrer l'avion axe par axe.

Dans cet exemple illustratif, la composante 100 de l'avion considéré présente la relation suivante:

$$m\dot{U}x_1 = -\frac{1}{2}\rho V^2 SC_x(\alpha) + T \cdot \cos(\alpha) + P\sin(\alpha),$$

où $V$ est la norme du vecteur vitesse de l'avion (m/s);

$\alpha$ : angle d'attaque (degrés);

$m$ : masse (kg);

$\rho$ : densité de l'air (kg/m$^3$);

$S$ : surface de référence des ailes (m$^2$);

$C_x(\alpha)$ : illustre la dépendance de la traînée à $\alpha$; et

$P$ : norme de la résultante de portance + poids (N), négligeable a priori devant m, $P = 0$.

L'ensemble de ces informations intervient dans l'état X de l'aéronef à l'instant que l'on souhaite équilibrer.

Le membre $-\frac{1}{2}\rho V^2 SC_x(\alpha)$ correspond à la traînée de l'aéronef; le membre $T \cdot \cos(\alpha)$, à la poussée de l'aéronef; et le membre $P\sin(\alpha)$, à la portance et au poids de l'aéronef.

Sachant que $Ux_1 = V\cos(\alpha)$, par le jeu des réécritures, on obtient:

$$\dot{U}x_1 = -\frac{\rho SC_x(\alpha)}{2m(\cos(\alpha))^2}(Ux_1)^2 + \frac{\cos(\alpha)}{m}(T)$$

En adoptant la représentation d'état: Y = X = $U_{x1}$, U = $T$, on déduit F(X) et G(X)=G du système, clairement non-linéaire :

$$F(Ux_1) = -\frac{\rho SC_x(\alpha)}{2m(\cos(\alpha))^2}(Ux_1)^2 \text{ et } G(Ux_1) = G = \frac{\cos(\alpha)}{m}.$$

Pour notre exemple, prenons les paramètres fixés suivants pour l'équilibre:

-    $m$ : 100000 kg

- $\rho$ : 1 kg/m$^3$
- $S$ : 200 m$^2$
- $C_x(\alpha)$ : 0.5 pour alpha = 5 degrés
- $\alpha$ : 5 degrés.

Dès lors, $F(X) = -\dfrac{1}{1984.032}(X)^2$ et $G(X) = G = \dfrac{1}{100401.6}$

L'écriture discrétionnaire pour notre exemple est:

$$\begin{cases} \Delta_{corr_{n+1}} = \Delta_{corr_n} + \delta t \left( \omega_{corr} \left[ (F_m + G_m T_n) - Ux_{1n} - \Delta_{corr_n} \right] \right) \\ T_n = G_m^* \left( \omega (Ux_{1cons} - Ux_{1n}) - F_m + \Delta_{corr_{n+1}} \right) \end{cases}$$

Pour réaliser l'équilibrage de l'avion par la détermination de U=T, on utilise le modèle suivant: $F_m = 0$, $G_m = 50\% * 1/m$. On choisit également $\omega_{corr} = 4\omega = 4$ rad/s.

L'approximation $F_m(X)=0$ permet de réduire les coûts de circuit et de calcul d'équilibrage car les blocs 302 et 404 peuvent alors être omis. Cette approximation résulte du fait que la convergence de l'estimateur 400 vers l'erreur de modélisation $\Delta_m$ est indépendante de l'erreur de modélisation de F.

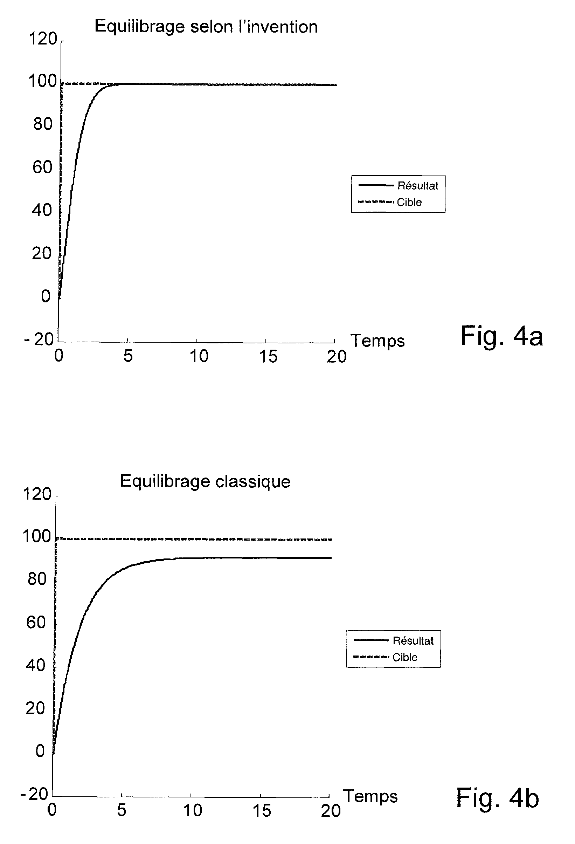

La **figure 4a** montre le résultat d'équilibrage obtenu dans ce cas par la mise en oeuvre de la présente invention.

La **figure 4b** montre le résultat d'équilibrage obtenu dans ce cas également par la mise en oeuvre d'un asservissement linéaire de l'état de la technique U = K (Y$_c$ - Y). Afin de comparer les mêmes dynamiques, le graphique 4b a été obtenu en utilisant un gain K=$\omega$.Gm*. On observe que la valeur de sortie souhaité ('cible') qui correspond notamment à la valeur de sortie du modèle utilisé en appliquant la commande d'équilibre obtenue diffère nettement de la valeur de sortie de la composante 100 avec cette même commande d'équilibre obtenue (valeur de sortie 'résultat'). Cette différence résulte de l'erreur de modélisation qui reste, dans le cas classique, non corrigée.

Par comparaison de ces deux graphiques, on observe que la détermination des commandes U du système à équilibrer est plus rapide et plus précise en utilisant l'invention. Notamment, l'erreur de modélisation est supprimée par la mise en oeuvre de l'invention (la cible et le résultat sont confondus), alors qu'elle perdure avec les techniques de l'art antérieur.

Grâce à un équilibrage efficace et précis résultant de la mise en oeuvre de l'invention, la transition entre la phase d'équilibrage/configuration initiale du prototype de simulation et la phase d'exploitation/test ne subit pas de discontinuité de valeurs entraînant par exemple des secousses de celui-ci voire une chute de la cabine de test (par exemple suite à un décrochage virtuel de l'avion simulé).

Par ailleurs, la forte tolérance aux erreurs de modélisation permet d'utiliser des modèles similaires pour un même aéronef dont les composantes de simulation évoluent et sont mises à jour tout au long du développement de l'aéronef, voire pour des aéronefs de types différents. La solution proposée par la présente invention est ainsi générique.

Par ailleurs, le découplage assuré par l'inversion du filtre 300 permet de régler aisément le profil et le temps de convergence de l'estimateur à grand gain (filtre 400), en calibrant un gain $1/\tau_i$ pour une commande donnée. On peut ainsi rendre le dispositif d'équilibrage déterministe.

On note également que la dérive numérique, vue de l'estimateur à grand gain, n'est qu'une erreur comme une autre. Comme montré précédemment, l'estimateur 400 corrige donc cette erreur jusqu'à ce que son effet se soit annulé. Il en résulte une répétitivité du système d'équilibrage proposé.

On observera, comme décrit dans la thèse "Méthodologie de synthèse de lois de commandes non-linéaires et robustes : Application au suivi de trajectoire des avions de transport", Fabien Lavergne, 2005, qu'un circuit partiellement semblable à celui de la **figure 3** a pu être prévu au niveau des équipements d'un aéronef, c'est-à-dire dans le système modélisé par le bloc 100 de la **figure 3,** aux fins de corriger des non linéarités d'actionneurs pendant l'exploitation de l'aéronef, c'est-à-dire son roulage effectif ou son vol effectif. En comparaison, le circuit d'équilibrage selon l'invention s'applique à des composantes de simulation représentatives de tels équipements d'aéronef afin, non pas de compenser des non linéarités d'éventuels actionneurs, mais d'utiliser des modèles simplifiés (que l'on connaisse ou non la fonction de transfert de la composante de simulation) pour calculer des points d'équilibre.

Les exemples qui précèdent ne sont que des modes de réalisation de l'invention qui ne s'y limite pas.

Notamment, l'estimateur à grand gain présenté ci-dessus appréhende les fonctions de modélisation $F_m$ et $G_m$ ensembles dans la même intégrale. Il pourrait toutefois être prévu deux filtres 400 parallèles chacun réalisant un estimateur à grand gain de l'erreur de modélisation de chacune des deux fonctions. Ainsi, les profils de convergence des deux filtres 400 pourront être adaptés individuellement en fonction de la robustesse de l'estimateur proposé aux erreurs de modélisation respectives.

Egalement, bien que l'invention ait été décrite dans le domaine aéronautique, elle peut s'appliquer à l'équilibrage de plateformes de simulation dans des domaines variés, notamment l'automobile, le spatial, le ferroviaire ou le nautisme.

**Revendications**

1. Plateforme de simulation (1) comprenant une pluralité d'équipements (20) de systèmes incluant au moins un système non linéaire et comprenant un dispositif d'équilibrage (50) dudit système non linéaire (Mi, 20, 100) à partir d'au moins une valeur de consigne $\left( Y^{(i)}_{k,cons} , \tilde{Y}_{cons} \right)$ à atteindre en sortie du système non linéaire, ledit système non linéaire fournissant au moins une valeur de sortie ($\tilde{Y}$, $\tilde{Y}^{(-1)}$) fonction d'au moins une commande (U) reçue en entrée, et ledit dispositif d'équilibrage (50) comprenant:

    - une boucle d'asservissement (200, 300) de l'au moins une valeur de sortie ($\tilde{Y}$, $\tilde{Y}^{(-1)}$) sur au moins une valeur correspondante de consigne $\left( Y^{(i)}_{k,cons} , \tilde{Y}_{cons} \right)$, , la boucle d'asservissement comprenant un premier filtre (300) réalisant une inversion d'un modèle simplifié ($F_m$, $G_m$) dudit système non linéaire (Mi, 20, 100) pour générer une dite commande (U) pour le système non linéaire à partir d'une information de correction de modèle ($\Delta_{corr}$) estimant une erreur ($\Delta_m$) de modélisation du modèle simplifié ($F_m$, $G_m$) et d'une information de différence (v) entre la valeur de sortie ($\tilde{Y}$, $\tilde{Y}^{(-1)}$) et la valeur correspondante de consigne $\left( Y^{(i)}_{k,cons} , \tilde{Y}_{cons} \right)$, et

    - un bouclage correcteur de modélisation pour fournir ladite information de correction de modèle ($\Delta_{corr}$) audit premier filtre (300), ledit bouclage correcteur comprenant un deuxième filtre (400) mettant en oeuvre ledit modèle simplifié ($F_m$, $G_m$) du système non linéaire pour calculer l'information de correction de modèle ($\Delta_{corr}$) à partir de la commande (U) en sortie du premier filtre (300) et de ladite valeur de sortie ($\tilde{Y}$, $\tilde{Y}^{(-1)}$) du système non linéaire.

2. Plateforme (1) selon la revendication précédente, dans laquelle le système non linéaire présente une fonction de transfert non linéaire affine ayant comme dynamique d'entrées-sorties:

$$\tilde{Y} = F(X) + G(X).U$$

où U est un vecteur correspondant à la commande d'entrée, X est un vecteur correspondant à un état du système non linéaire et $\tilde{Y}$ est un vecteur correspondant à l'au moins une valeur de sortie.

3. Plateforme (1) selon la revendication précédente, dans laquelle la modélisation simplifiée ($F_m$) de F(X) a une valeur nulle.

4. Plateforme (1) selon la revendication 2 ou 3, dans laquelle ledit modèle simplifié ($F_m$, $G_m$) est non linéaire affine de la forme $\tilde{Y} = F_m(X) + G_m(X).U,$ et le bouclage correcteur de modélisation est régi par:

$$\begin{cases} \Delta_{corr} = \omega_{corr} \int \left( \left( F_m(X) + G_m(X).U \right) - Y - \Delta_{corr} \right) dt \\ U = G_m^*(X).\left( v - F_m(X) + \Delta_{corr} \right) \end{cases},$$

où $\Delta_{corr}$ est l'information de correction de modèle, ($\omega_{corr}$ est le gain du deuxième filtre, et v est une valeur représentative de la différence entre la valeur de sortie ($\tilde{Y}$, $\tilde{Y}^{(-1)}$) du système non linéaire (Mi, 20, 100) et la valeur de consigne correspondante $\left( Y^{(i)}_{k,cons} , \tilde{Y}_{cons} \right)$.

**5.** Plateforme (1) selon l'une des revendications précédentes, dans laquelle le deuxième filtre (400) comprend des composants (402, 404, 406, 408, 410) pour estimer l'intégrale de la différence entre la valeur de sortie *($\tilde{Y}_{corr}$)* du modèle simplifié ($F_m$, $G_m$) corrigé par l'information de correction ($\Delta_{corr}$) appliquée à ladite commande générée (U) et la valeur de sortie *($\tilde{Y}$, $\tilde{Y}^{(-1)}$)* du système non linéaire (Mi, 20, 100).

**6.** Plateforme (1) selon la revendication précédente, dans laquelle lesdits composants pour estimer comprennent des moyens (402, 404) pour évaluer la valeur de sortie du modèle simplifié ($F_m$, $G_m$) à partir de la commande générée (U), un additionneur/soustracteur (406) pour modifier cette valeur par soustraction de l'information de correction ($\Delta_{corr}$), un intégrateur (408) pour intégrer la sortie *($\tilde{Y}_{corr}$)* de l'additionneur/soustracteur (406) et un deuxième additionneur/soustracteur (410) pour soustraire à la sortie de l'intégrateur, une valeur intégrée ($\tilde{Y}^{(-1)}$) de la sortie du système non linéaire (Mi, 20, 100).

**7.** Plateforme (1) selon la revendication précédente, dans laquelle le deuxième filtre (400) comprend un composant (412) multipliant l'intégrale évaluée par un gain ($\omega_{corr}$, $1/\tau_i$).

**8.** Plateforme (1) selon l'une des revendications précédentes, comprenant un troisième filtre linéaire (200) pour estimer une information de différence (*v*) de l'au moins une valeur de sortie ($\tilde{Y}$, $\tilde{Y}^{(-1)}$) du système non linéaire (Mi, 20, 100) et de l'au moins une valeur correspondante de consigne $\left( Y^{(i)}_{k,cons} , \tilde{Y}_{cons} \right)$, et fournir ladite information de différence (v) en entrée dudit premier filtre (300).

**9.** Procédé d'équilibrage d'une plateforme de simulation (1) comprenant une pluralité d'équipements (20) de systèmes incluant au moins un système non linéaire et comprenant un dispositif d'équilibrage (50) dudit système non linéaire (Mi, 20, 100) à partir d'au moins une valeur de consigne $\left( Y^{(i)}_{k,cons} , \tilde{Y}_{cons} \right)$ à atteindre en sortie du système non linéaire, ledit système non linéaire fournissant au moins une valeur de sortie *($\tilde{Y}$, $\tilde{Y}^{(-1)}$)* fonction d'au moins une commande (U) reçue en entrée, le procédé comprenant, au niveau du dispositif d'équilibrage,:

   - une étape d'asservissement de l'au moins une valeur de sortie *($\tilde{Y}$, $\tilde{Y}^{(-1)}$)* sur au moins une valeur correspondante de consigne $\left( Y^{(i)}_{k,cons} , \tilde{Y}_{cons} \right)$ par inversion d'un modèle simplifié ($F_m$, $G_m$) dudit système non linéaire (Mi, 20, 100), pour générer une dite commande (U) pour le système non linéaire à partir d'une information de correction de modèle ($\Delta_{corr}$) estimant une erreur ($\Delta_m$) de modélisation du modèle simplifié ($F_m$, $G_m$) et d'une information de différence (v) entre la valeur de sortie ($\tilde{Y}$, $\tilde{Y}^{(-1)}$) et la valeur correspondante de consigne $\left( Y^{(i)}_{k,cons} , \tilde{Y}_{cons} \right)$, et,

   - une étape de correction de modélisation mettant en oeuvre ledit modèle simplifié ($F_m$, $G_m$) du système non linéaire pour calculer l'information de correction de modèle ($\Delta_{corr}$) à partir de la commande (U) générée et de ladite valeur de sortie ($\tilde{Y}$, $\tilde{Y}^{(-1)}$) du système non linéaire.

**10.** Produit programme d'ordinateur lisible par un microprocesseur, comprenant des portions de code logiciel adaptées à mettre en oeuvre le procédé d'équilibrage selon la revendication précédente, lorsqu'il est chargé et exécuté par le microprocesseur.

Fig. 1

Fig. 2

Fig. 3

Equilibrage selon l'invention

Fig. 4a

Equilibrage classique

Fig. 4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FABIEN LAVERGNE.** *Méthodologie de synthèse de lois de commandes non-linéaires et robustes : Application au suivi de trajectoire des avions de transport,* 2005